# EUROPEAN PATENT APPLICATION

(11) **EP 4 576 289 A1**
(43) Date of publication of application: **25.06.2025**
(21) Application number: 23219726.9
(22) Date of filing: 22.12.2023
(51) Int. Cl.: H01M 10/04, B65B 5/04, B65B 31/04, B65B 43/46

(54) **HANDLING DEVICE AND METHOD FOR ASSEMBLING BATTERY UNIT**

(71) Applicant: Rimac Technology LLC, 10431 Sveta Nedelja (HR)
(72) Inventor: Dilberovic , Zlatko, 10410 Velika Gorica (HR)
(74) Representative: Grassi, Stefano

(57) **Abstract**

A handling device for battery units (B) comprises a vacuum chamber. The vacuum chamber comprises in turn a base plate (2) and an engaging portion (3). The base plate (2) presents a terminal connectable to a vacuum source and the engaging portion (3) defines at least one opening in fluid connection with the terminal. The engaging portion (3) is configured to engage in an airtight manner an open end of a vacuum bag (V) containing at least one battery unit (B) so that the vacuum chamber can be overall activated in a use configuration to remove air from the vacuum bag (V) compressing the battery unit (B).

## Description

### Technical field

The present invention pertains to the technical field of industrial devices and methods, in particular for assembling battery unit.

For example, said battery unit may comprise or be made up of batteries to be used in the automotive field or for stationary energy storage.

### Background art

In many applications, it is known to implement batteries comprising a plurality of interconnected cells that are inserted in a common housing.

To improve the lifecycle of this kind of batteries there is a need to compress them.

However, both the handling of the single cells and the production of the complete battery is nowadays a complex and cumbersome procedure that requires means to apply pressure and thus compress the cells once they are already placed in their final housing.

For example, it is known to implement frames with movable parts, which could be pushed against the cells once they are inserted in the frame itself and then blocked in position (e.g. welded) to keep the cells in a compressed configuration.

However, it is evident how such a structure ends up being mechanically complicated and difficult to implement, at least insofar it is necessary to design structures with movable portions that need to be managed while at the same time taking care of the cells.

Furthermore, the preparation of the battery requires the handling of the single cells and their insertion directly in the frame that is meant to contain them, complicating the overall procedure.

### Summary of the invention

In this context, the technical purpose which forms the basis of the present invention is to provide a handling device and method which overcome at least some of the above-mentioned drawbacks of the prior art.

In particular, the aim of the invention is to provide a handling device and method with an increased efficiency and easiness of implementation deriving from a simplification of the structure and a reduction of the steps necessary to prepare and handle a battery unit.

The technical purpose indicated, and the aims specified, are substantially achieved by a device and a method comprising the technical features described in one or more of the appended claims.

In particular, the invention describes a handling device for battery units. Said device comprises a vacuum chamber essentially comprising a base plate and an engaging portion.

The base plate presents a terminal connectable to a vacuum source.

The engaging portion presents a plurality of openings in fluid connection with the base plate.

The engaging portion is configured to engage in an airtight manner an open end of a vacuum bag containing at least one battery unit.

The vacuum chamber can be activated in a use configuration to remove air from the vacuum bag compressing the battery unit.

Advantageously the handling device is capable of both compressing a plurality of battery cells forming up at least one battery unit and to move the same, providing an easy and efficient tool for the preparation and installation of battery units.

Further to the above, the invention also describes a battery assembly. Said battery assembly essentially comprises a supporting frame, at least one battery unit and a vacuum bag.

The supporting frame presents a fixed shape and size.

In particular, the supporting frame is non-deformable.

The battery unit is inserted in a compressed configuration into said supporting frame.

The vacuum bag is interposed between the supporting frame and the battery unit.

Preferably, the vacuum bag is made of an electrically insulating material. Advantageously said battery assembly presents a particularly solid and stable structure, with the non-deformable frame that guarantees a correct compression of the battery unit throughout its entire life.

Further to the above, the present invention also describes a method for handling a battery unit.

Said method may be further identified as a method for the preparation of a battery assembly.

Said method is performed by executing the steps described in the following.

At least one battery unit is inserted inside a vacuum bag.

The vacuum bag is coupled to a vacuum chamber.

In particular, an upper end of the vacuum bag is coupled in an airtight manner to an engaging portion of the vacuum chamber.

Subsequently the vacuum chamber is activated, and the battery unit is compressed.

At the same time, the vacuum bag is moved inside a supporting frame while maintaining the vacuum condition.

Alternatively, the vacuum bag can be moved inside the supporting frame while maintaining the vacuum condition after the battery unit have been compressed.

Finally, the vacuum condition is released.

Advantageously, this method proves to be quick and efficient, with the application of the vacuum technology that removes the necessity for mechanically complex structure for the movement and the compression of the battery unit.

### Brief description of drawings

Further features and advantages of this invention are more apparent in the detailed description below, with reference to preferred, non-restricting, embodiment of the invention as illustrated in the accompanying drawings, in which:
- figures 1A and 1B respectively show a front section and a bottom view of a first embodiment of the claimed handling device;
- figures 2A and 2B respectively show a front section and a bottom view of a second embodiment of the claimed handling device;
- figures 3A and 3B respectively show a front section and a bottom view of a third embodiment of the claimed handling device;
- figures 4A and 4B respectively show a front section and a bottom view of a fourth embodiment of the claimed handling device;
- figures 5A and 5B respectively show a front section and a bottom view of a fifth embodiment of the claimed handling device;
- figures 6A, 6B and 6C show respective front section of different possible use configuration of the embodiment according to figures 5A and 5B.

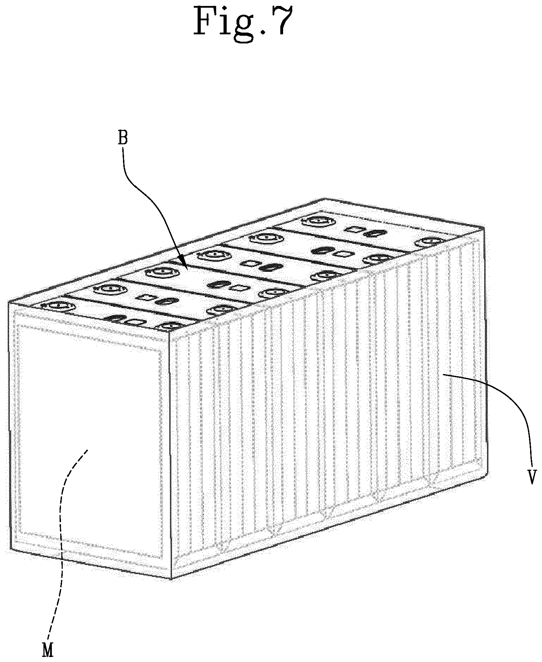

- Figure 7, is a view showing a battery unit ready to be processed by the claimed device.

### Detailed description of preferred embodiments of the invention

According to the present invention, it is described a handling device for battery units B, which will be indicated in the following description simply as device 1 or handling device 1 for conciseness.

Said handling device 1 is particularly configured to engage and move battery cells, for example battery cells meant to form up one or more battery unit B that can be implemented in a wide variety of technical field, among which for example the automotive field or for stationary energy storage.

Essentially, said device 1 comprise or more in general defines a vacuum chamber.

The activation of said vacuum chamber allows to simultaneously or subsequently engage and hold a plurality of battery cells and also compress them thanks to a novel approach that will be discussed in the following.

Structurally, the vacuum chamber comprises a base plate 2 and an engaging portion 3.

The base plate 2 presents a terminal or a connecting portion configured to be connected to a vacuum source, e.g. a pump or in general a source of pneumatic pressure able to generate a negative pressure gradient.

Said terminal may be an aperture defined in the base plate 2 and to which the vacuum source may be connected (in particular reversibly connected) for example by means of a threaded profile or a coupling element comprised in the base plate such as a spigot or a valve.

Advantageously, the device 1 may further comprise the vacuum source itself.

The engaging portion 3 defines at least one opening in fluid connection with the terminal, so as to be in turn connectable with the vacuum source. Preferably, the engaging portion 3 defines a plurality of openings.

Said engaging portion 3 is configured to engage in an airtight manner an open end of a vacuum bag V.

In particular, specifically in a use configuration, the engaging portion 3 is configured to engage a vacuum bag V containing at least one battery unit B so as that the vacuum chamber can be activated to extract air from the vacuum bag V and thus compress the battery unit contained therein.

In other words, the vacuum chamber is activable (for example by activating the vacuum source connected to the base plate 2) to remove air from the vacuum bag V thus shrinking it causing in turn the desired compression of the battery unit inside of it.

Thus by creating a vacuum condition it is possible to efficiently compress the battery unit B inside the vacuum bag V.

Further to the above, the created vacuum condition works as a suction mechanism allowing the device 1 to grab the battery unit B and consequently it is possible with just one device 1 to both compress the battery unit and at the same time handle, move, displace the entire battery unit B.

Once the battery unit B is compressed, it is then possible to move the device 1 to bring the battery unit B inside of a frame presenting a fixed shape (thus characterized by a more stable, simple and economical structure than that of currently used frames) and release it, completing the installation procedure.

Advantageously, the device 1 described herein provide a single tool able to efficiently perform both the compression and the transfer of the battery unit B.

According to a possible embodiment of the device 1, the same further comprises a mechanical arm connected/coupled, preferably reversibly coupled, to the base plate 2.

The mechanical arm can be configured for rotational and/or translational movement to help transferring and handling the battery unit B once compressed.

Preferably, the mechanical arm may be a robotic arm.

According to a further aspect of the present invention, the device 1 also comprises at least one vacuum gripper 4 arranged inside the vacuum chamber.

Said vacuum gripper 4 allows to grip and hold in an even more stable way the battery unit B to be moved.

Preferably, the number of vacuum gripper 4 arranged inside the vacuum chamber is proportional to the total area of the base plate 2.

In other words, a bigger base plate 2 is able to handle more battery cells at the same time and as such may be equipped with a higher number of vacuum gripper 4, ideally at least one vacuum gripper 4 for each battery cell to be handled.

In this context, the vacuum gripper 4 may be connected to the same or to a different vacuum source as the base plate 2 and, preferably, each vacuum source, each vacuum gripper and the vacuum chamber are activable simultaneously so as to extract air from the vacuum bag V and grip the battery unit B with the vacuum gripper at the same time. Alternatively or additionally to the presence of the vacuum gripper 4, the engaging portion 3 may comprise at least two groups of openings, with each group being characterized by a specific shape and/or dimension of its openings.

In this context, the engaging portion 3 may for example comprise a first group of openings 3a' presenting shape and size specifically configured to create the vacuum condition inside the vacuum bag V and a second group of openings 3a" presenting shape and size specifically configured to optimally grab and hold the battery cells and which are in general different from the size and/or shape of the openings 3a' of the first group.

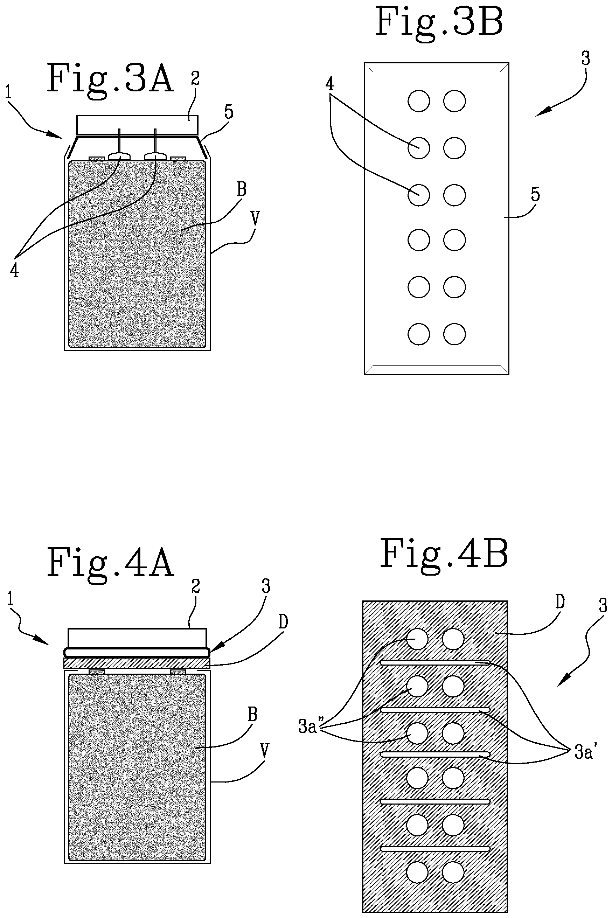

As can be seen in figure 4b, the first group may comprise a first group of openings 3a' presenting a linear shape optimal to create the desired vacuum condition, while the second group of openings 3a" presents a circular shape which works particularly well to grip the battery cells.

The different groups of openings may be connected, through the base plate 2, to the same vacuum source or to different specific vacuum sources each configured to provide the amount of suction necessary for the correct and optimal functioning of each group of openings 3a', 3a". Furthermore, independently from their number, shape and size, each opening of the engaging portion 3 may be provided with a dedicated shutter, so that they may be selectively closed and rendered non operative if such a need arises.

Advantageously, the device 1 may also comprise a kit or a plurality of interchangeable vacuum chambers, each one of them comprising a respective base plate 2 and a corresponding engaging portion 3.

Each vacuum chamber (specifically its base plate 2 and engaging portion 3) presents a specific surface area/size which is different from the surface area/size of each other vacuum chamber of the kit.

In this way, the device 1 may be customized and adapted to optimally manage and handle different numbers and/or shapes of battery cells and vacuum bags V.

Turning now to the structure of the engaging portion 3, different embodiments are hereby presented and all of them may benefit for the presence of one or more of the features and components described up to this point.

According to a first aspect of the present invention, the engaging portion 3 may comprise a wall 5 developing away from the base plate 2.

In particular, as visible specifically in figures 3A, said wall 5 may be inclined at an angle with respect to the base plate 2 and be configured to be inserted in the upper end of the vacuum bag V, engaging the same with its external surface.

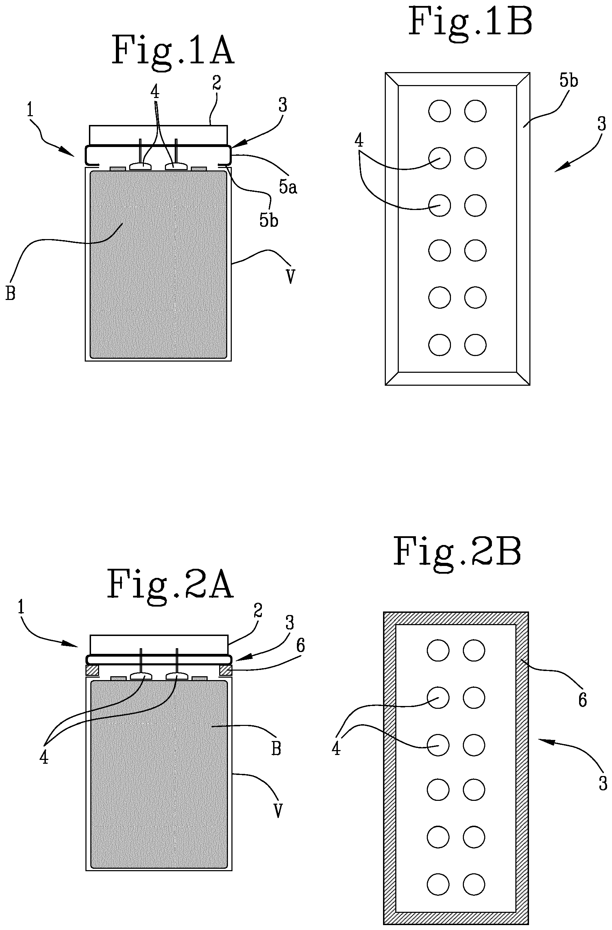

According to a further embodiment, visible specifically in figure 1 A, the wall 5 comprises a first portion 5a developing away from the base plate 2 and a second portion 5b developing away from the first portion 5a.

Preferably, the second portion 5b develops parallel to the base plate 2 or presenting a preset inclination.

In this context, the engaging portion 3 is configured to engage the open end of the vacuum bag V in an external surface of the second portion 5b. In particular, the engaging portion 3 may engage with the external surface of the second portion 5b a folded exterior portion of the open end of the vacuum bag.

Operatively, the upper end of the vacuum bag V may be folded inward and then the second portion 5b is placed against it.

In both of the above situations, the vacuum chamber may comprise a gasket 6 externally coupled to the first and/or to the second portion 5a, 5b of the wall and configured to engage the open end of the vacuum bag.

As shown in figures 2A and 2b, the gasket 6 may even substitute or integrate or concur to define the wall 5 structure while in general acting as an interface between the engaging portion 3 and the upper end of the vacuum bag V.

Said gasket 6 may be made of a polymeric material and/or at least partially present a foam or sponge structure.

In general, the gasket 6 is deformable so as to improve the airtight connection between the engaging portion 2 and the vacuum bag V.

According to the embodiment shown in figures 4A and 4B, the engaging portion 3 comprises a deformable layer D, preferably extending all over the entire surface of the engaging portion and presenting or concurring to define a first and a second group of openings 3a', 3a" of said engaging portion 3.

Especially in this context, the vacuum gripper 4 and their function may be substituted with the use of the above-mentioned different groups of openings.

The deformable layer D may also extend only on a limited portion of the surface of the engaging area, for example only along a border of said engaging area to improve the grip of the vacuum chamber over the upper end of the vacuum bag V.

In this context, the deformable layer D may be integral with, comprise or concur to define the gasket 6.

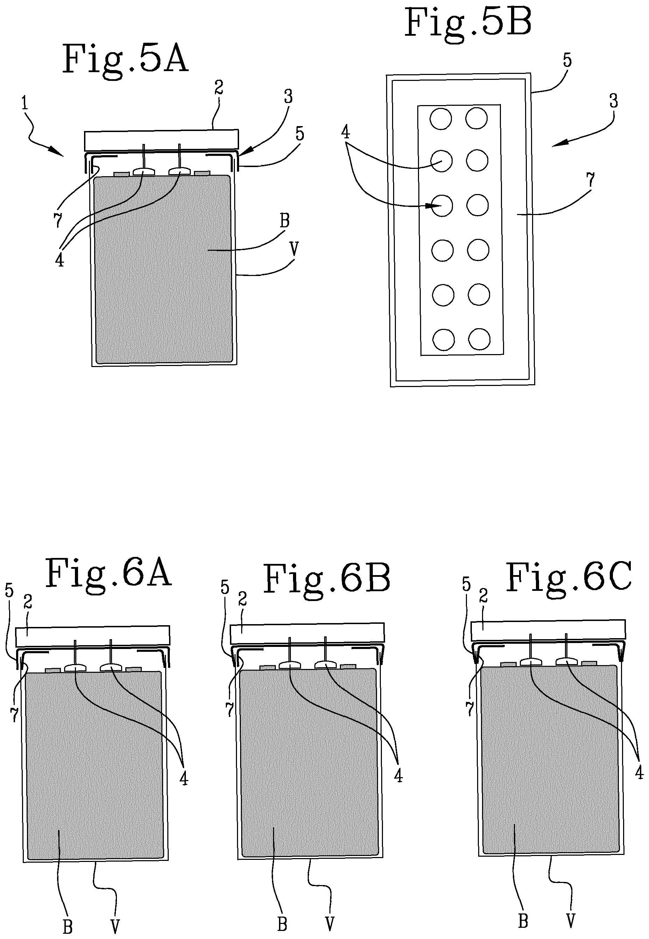

According to a further embodiment shown in figures 5A and 5B, the engaging portion 3 comprises a first wall 5 and a second wall 7 facing the first wall 5 to define a seat configured to engage and hold the open end of the vacuum bag V.

For example, as shown in figures 5A and 5B, the first wall 5 may extend away from the base plate 2 along a perimeter of vacuum chamber defining an outer side of the seat and the second wall 7 defines an inner side of said seat.

In this context, in a use configuration, the upper end of the vacuum bag V is inserted into the seat before the activation of the vacuum chamber.

Preferably, to optimize the airtight coupling between the vacuum bag V and the engaging portion 3, at least one between the first wall 5 and the second wall 7 is movable so as to vary the width of the seat to pinch, in a use configuration, the open end of the vacuum bag.

In particular, said movement may be obtained by having the walls 5, 7 (just a portion of the walls 5, 7 or their entirety) made of a deformable material or providing walls with movable sides connected with stretchable portion. For example, each wall 5, 7 may comprise or consist of 4 straight movable tracts positioned to form the sides of a quadrilateral and connected with stretchable portion defining the corners of the quadrilateral.

Operatively and in general the walls 5, 7 are movable in mutual approach to pinch the upper end of the vacuum bag V.

Figures 6A to 6C shows respective use configuration of possible embodiments wherein one wall, the other or both of them are movable/deformable.

Advantageously, the same engaging portion 3 may comprise a plurality of walls 5, each wall (or each couple of walls 5, 7) being configured to delimit a respective working area configured to engage a respective vacuum bag V.

In this way, a single device 1 may simultaneously prepare, compress and handle a plurality of battery units B inside respective vacuum bags V. According to a possible embodiment of the present application, the base plate 2 and the engaging portion 3 are two separate and distinct components coupled together by way of known means.

Alternatively, the base plate 2 and the engaging portion may be made of a single piece.

In other words, the engaging portion 3 may be integral with the base plate 2.

In this context, the device may comprise a vacuum chamber made only of or comprising a base plate 2 formed by a single plate presenting the terminal and the engaging portion 3 obtained with a plurality of walls developing away from respective sides of the base plate 2 and defining one single opening.

Advantageously, the proposed device 1 addresses and overcomes the issues of the known prior art, insofar it avoids the need for complicated and cumbersome mechanical structure for the containment of the battery unit B and provides a novel way to contextually compress its battery cells and move them with a single and structurally simple, tool.

The present invention further pertains to a battery assembly.

Structurally, said battery assembly comprises a supporting frame, at least one battery unit B and a vacuum bag V.

The supporting frame is characterized by a fixed shape and size.

It is to say that the frame is rigid and cannot be deformed and its parts maintain a fixed position with respect to each other.

The at least one battery unit B is positioned/inserted in a compressed configuration inside the frame, which being rigid can optimally maintain the compressed configuration of the battery unit B.

Said battery unit B may in particular comprise at least one pouch battery cell or at least one prismatic battery cell and at least one compression layer M interposed between the prismatic battery cell and the vacuum bag and/or between adjacent battery cells.

The vacuum bag is interposed between the supporting frame and the at least one battery unit B, preferably said vacuum bag being made of an electrically insulating material.

The present invention further pertains a method for handling battery units, in particular said method being performable thanks to the device 1 described above.

Said method is performed by inserting at least one battery unit B inside a vacuum bag V.

Subsequently, the vacuum bag V is coupled to a handling device 1 with a vacuum chamber, in particular a vacuum chamber presenting one or more of the above-described features.

More in detail, an open end of the vacuum bag V is coupled in an airtight manner with an engaging portion of the vacuum chamber.

Then, the activation of the vacuum chamber allows to remove/extract air from the vacuum bag V, thus compressing the battery unit B.

In particular, when the vacuum chamber is activated and air is removed from the vacuum bag V, the compression layers M coupled to the battery cells and interposed between them are compressed and in the case that pouch battery cells are implemented, it is possible to obtain a compression of the cells themselves.

Simultaneously or subsequently to the activation of the vacuum chamber to compress the battery unit B, it is also possible to move the vacuum bag V inside a supporting frame while maintaining the vacuum condition.

In particular, the vacuum bag V (containing the compressed battery unit B) is moved into a supporting frame presenting a fixed shape and size. Finally, the vacuum chamber is deactivated, thus releasing the vacuum condition.

However, being inserted into a supporting frame of fixed shape and size (i.e. a non-deformable frame) the compressed configuration of the battery unit B is guaranteed and maintained.

According to a possible embodiment, the coupling between the vacuum chamber and the vacuum bag V is performed by applying to the latter a vacuum chamber comprising at least one vacuum gripper, which is activable to grip the at least one battery unit B and preferably to individually grip each one of the battery cells forming the battery unit B. After moving the vacuum bag V inside the frame, the at least one vacuum gripper can be released to disengage the at least one battery unit B. Preferably, the steps of compressing the battery unit B and gripping the at least one battery cell are performed simultaneously.

## Claims

1. Handling device for battery units (B), the device comprising a vacuum chamber comprising:
- a base plate (2) presenting a terminal connectable to a vacuum source and
- an engaging portion (3) defining at least one opening in fluid connection with the terminal, said engaging portion (3) being configured to engage in an airtight manner an open end of a vacuum bag (V) containing at least one battery unit (B);
said vacuum chamber being activable in a use configuration to remove air from the vacuum bag (V) compressing the battery unit (B).

2. Handling device according to claim 1, comprising a mechanical arm, preferably a robotic arm, configured for rotational and/or translational movements, the base plate (2) being reversibly coupled to said mechanical arm.

3. Handling device according to claim 1 or 2, wherein the engaging portion (3) comprises a wall (5) developing away from the base plate (2).

4. Handling device according to claim 3, wherein the engaging portion (3) comprises a first wall (5) and a second wall (7) facing the first wall (5) to define a seat configured to engage and hold the open end of the vacuum bag (V).

5. Handling device according to claim 4, wherein at least one between the first wall (5) and the second wall (7) is movable so as to vary the width of the seat to pinch, in a use configuration, the open end of the vacuum bag (V).

6. Handling device according to claim 4, wherein at least a portion of at least one between the first wall (5) and the second wall (7) is flexible so as to be deformable, in a use configuration, to pinch the open end of the vacuum bag (V).

7. Handling device according to claim 3, wherein the wall (5) presents a first portion (5a) developing away from the base plate (2) and a second portion (5b) developing away from the first portion (5a), preferably in a direction parallel to the base plate (2), said engaging portion (3) being configured to engage the open end of the vacuum bag (V) in an external surface of the second portion (5b).

8. Handling device according to claim 1 or 2, wherein the engaging portion (3) comprises a deformable layer (D) configured to engage the upper end of the vacuum bag (V).

9. Handling device according to any of the preceding claims, wherein the engaging portion (3) defines a plurality of openings and said plurality of openings comprises at least two different groups of openings (3a', 3a") with different size and/or shape.

10. Handling device according to any of the preceding claims, comprising at least one vacuum gripper (4) arranged inside the vacuum chamber.

11. Handling device according to any of the preceding claims, comprising a vacuum source coupled with the vacuum chamber and with the at least one vacuum gripper (4), said vacuum source being configured to simultaneously activate the vacuum chamber and the at least one vacuum gripper (4).

12. Battery assembly comprising:
- a supporting frame presenting a fixed shape and size;
- at least one battery unit (B) inserted in a compressed configuration into said supporting frame;
- a vacuum bag (V) interposed between the supporting frame and the at least one battery unit (B), preferably said vacuum bag (V) being made of an electrically insulating material.

13. Battery assembly according to claim 12, wherein the battery unit (B) comprises:
- at least one pouch battery cell; or
- at least one prismatic battery cell and at least one compression layer (M) interposed between the prismatic battery cell and the vacuum bag (V) and/or between adjacent battery cells.

14. Method for handling battery units (B), the method comprising the steps of:
- inserting at least one battery unit (B) inside a vacuum bag (V);
- coupling a vacuum chamber to the vacuum bag (V) by engaging in an airtight manner an open end of the vacuum bag (V) with an engaging portion (3) of said vacuum chamber;
- compressing the battery unit (B) by activating the vacuum chamber;
- moving the vacuum bag (V) inside a supporting frame while maintaining the vacuum condition;
- releasing the vacuum condition.

15. method according to claim 14, wherein said coupling is performed by coupling a vacuum chamber comprising at least one vacuum gripper (4) to the vacuum bag (V) and the method further comprises the steps of:
- gripping the at least one battery unit (B) with the at least one vacuum gripper (4);
- after moving the bag, releasing the at least one vacuum gripper (4) disengaging the at least one battery unit (B).

16. Method according to claim 15, wherein said steps of compressing the battery unit (B), gripping the at least one battery unit (B) and moving the vacuum bag are performed simultaneously.
